# EUROPEAN PATENT APPLICATION

(11) **EP 2 819 262 A1**
(43) Date of publication of application: **31.12.2014**
(21) Application number: 13752002.9
(22) Date of filing: 20.02.2013
(51) Int. Cl.: H02J 7/00, H02G 11/02

(54) **CABLE HOUSING DEVICE**

(30) Priority: 22.02.2012 JP 2012036635
(71) Applicant: Chuo Hatsujo Kabushiki Kaisha, Nagoya-shi, Aichi 458-8505 (JP)
(72) Inventor: DOHARA, Hisashi, Nagoya-shi Aichi 458-8505 (JP); MIZUNO, Eiji, Nagoya-shi Aichi 458-8505 (JP); IWAMI, Kenji, Nagoya-shi Aichi 458-8505 (JP)
(74) Representative: Kramer Barske Schmidtchen Patentanwälte PartG mbB
(86) International application number: PCT/JP2013/054153
(87) International publication number: WO 2013/125573

(57) **Abstract**

A storage device for a cable includes: a holder including a socket connected to a power source side; a reel attached to the holder so as to be attachable thereto and detachable therefrom and including a rotary drum to take up the cable; a socket provided on the reel and fitted with the socket of the holder when the reel is attached to the holder; and an elastically-deformable elastic member that is provided on at least one member of the holder and the reel and presses the socket of the one member to the side of the socket of the other member.

## Description

### CROSS-REFERENCE TO RELATED APPLICATIONS

This international application claims the benefit of Japanese Patent Application No. 2012-036635 filed February 22, 2012 in the Japan Patent Office, and the entire disclosure of Japanese Patent Application No. 2012-036635 is incorporated herein by reference.

### TECHNICAL FIELD

The present invention relates to a cable storage device.

### BACKGROUND ART

For example, the invention according to Patent Document 1 (the invention relating to a charging-cable storage device) includes a charging cable having a vehicle-side connector (socket) provided at one end thereof and a charging-device-side connector (socket) provided at the other end thereof, a rotating drum around which the charging cable is wound and held, and a housing to rotatably hold the rotating drum. The vehicle-side connector (socket) is connected to a connector provided to an electrically-driven vehicle (specifically, a plug-in hybrid vehicle). The charging-device-side connector (socket) is connected to a connector provided to a charging power supply.

When charging the electrically-driven vehicle, it is necessary to pull out the charging cable wound around the rotating drum and attach the vehicle-side connector to the electrically-driven vehicle, and to attach the power-supply-side connector to the charging device, in a state in which the entirety of the storage device is fixed to the charging device provided to the charging power supply.

### PRIOR ART DOCUMENTS

### PATENT DOCUMENTS

Patent Document 1: Japanese Unexamined Patent Application Publication No. 2010-115037

### SUMMARY OF THE INVENTION

### PROBLEMS TO BE SOLVED BY THE INVENTION

Generally, an electrically-driven vehicle is provided with a charging cable as standard equipment. Mileage of an electrically-driven vehicle is not as excellent as that of a vehicle having an internal combustion engine as a driving source, and thus, it is preferred to always have a charging cable stored in the trunk or the like in preparation for power shortage.

However, the charging cable provided as standard equipment is generally provided as a lone cable and is long in length. Thus, the charging cable has difficulties in storability and loadability when being stored in the trunk or the like.

Especially, the invention according to Patent Document 1 has a problem in terms of loadability because it is necessary to load the entirety of the storage device in the vehicle in addition to the charging cable provided as standard equipment.

It is preferred to improve storability and loadability of the charging cable.

### MEANS FOR SOLVING THE PROBLEMS

The present invention is a storage device for a cable, the device including: a holder including a socket connected to a charging power supply side; a reel attached to the holder so as to be attachable thereto and detachable therefrom and including a rotary drum to take up the cable; a socket provided on the reel and fitted with the socket of the holder when the reel is attached to the holder; and an elastically-deformable elastic member that is provided on at least one member of the holder and the reel and presses the socket of the one member to the side of the socket of the other member.

Thus, in the present invention, the cable is stored in a wound state and the reel is attachable to and detachable from the holder. Accordingly, the holder can be installed in a place such as a garage or parking space, where charging can be carried out, and the reel alone can be carried while stored in a trunk space or the like.

In the present invention, the reel is attachable to and detachable from the holder. Therefore, if the reel is displaced with respect to the holder while kept attached to the holder, the fitted state of the pair of sockets may become unsatisfactory. Unsatisfactory fitted state of the sockets increases electric resistance at the fitting areas.

To cope with this, in the present invention, the elastic member is provided, which presses the socket of the one member to the side of the socket of the other member. Accordingly, even if the reel is displaced with respect to the holder, the socket of the one member can be displaced following the socket of the other member.

Therefore, even if the reel is displaced with respect to the holder, satisfactory fitted state of the pair of sockets can be maintained; and therefore there is no risk that the fitted state thereof becomes unsatisfactory.

In the present invention, the socket of the one member is integrated with a slip ring including a fixed contact and a slide contact and receives pressing force from the elastic member via the slip ring. Additionally, the holder and reel are respectively provided with a pair of first abutting portions that come into contact with each other when both of the sockets are fitted with each other. Also, the one member is provided with a stopper that restricts the maximum displacement of the slip ring, by contact of the stopper with a second abutting portion provided on the slip ring. Moreover, when the reel is attached to the holder, the contact of the stopper with the second abutting portion may take place before the contact of the pair of first abutting portions with each other takes place.

Also, in the present invention, the stopper may be a projection that sticks out toward the slip ring, and the stopper may also function as a spring seat that restricts movement of the elastic member in a direction intersecting a pressing direction of the elastic member.

In the present invention, the socket integrated with the slip ring may be integrated at the side of the slide contact of the slip ring, and the elastic member may apply the pressing force to the side of the fixed contact of the slip ring.

Also, in the present invention, the elastic member may be provided on the holder. Additionally, in the present invention, the fixed contact and the slide contact may be connected so as to be electrically conductive via a wave spring made of a conductive material.

In the present invention, the fixed contact and the slide contact may be each slidably in contact with the wave spring.

Also in the present invention, the wave spring may be configured so as to be compression deformed while disposed in contact with each of the fixed contact and the slide contact.

In the present invention, the elastic member may be a coil spring, and the storage device may further include a guide member that extends through the elastic member.

Referring to the accompanying drawings, one embodiment of the present invention will now be described. It should be understood that specific features, aspects, and so on of the invention described in the claims are not limited to the means, configurations, and so on disclosed in detail in the embodiment described below.

### BRIEF DESCRIPTION OF THE DRAWINGS

Fig. 1 is a front perspective view of a storage device according to an embodiment of the present invention.
Fig. 2 is a front perspective view of a holder 10 according to the embodiment of the present invention.
Fig. 3 is a front perspective view of a reel 20 according to the embodiment of the present invention.
Fig. 4 is a back view of the reel 20 according to the embodiment of the present invention.
Fig. 5 is a sectional view of the reel 20 according to the embodiment of the present invention.
Fig. 6 is the structure of a slip ring 30 and its supporting structure according to the embodiment of the present invention.
Fig. 7 is an explanatory view illustrating the characteristics of the storage device according to the embodiment of the present invention.
Fig. 8 is an explanatory view illustrating the characteristics of the storage device according to the embodiment of the present invention.
Fig. 9 is an explanatory view illustrating the characteristics of the storage device according to the embodiment of the present invention.
Fig. 10 is an explanatory view illustrating the characteristics of the storage device according to the embodiment of the present invention.
Fig. 11 is an explanatory view illustrating the characteristics of the storage device according to the embodiment of the present invention.

### EXPLANATION OF REFERENCE NUMERALS

1... storage device for charging cable, 3 ... charging cable, 10... holder, 11 ...holder-side socket, 11A...fitting hole, 11B...first abutting portion, 13...holder casing, 13A...back cover, 15...elastic member, 20...reel, 21...back plate, 25...reel-side socket, 25A...terminal, 25B...first abutting portion, 30...slip ring, 31...fixed contact plate, 31A...through-hole, 31B...second abutting portion, 33...slide contact plate, 35...wave spring, 37...guide member, 39...stopper

### MODE FOR CARRYING OUT THE INVENTION

The present embodiment applies the invention to a storage device that stores a charging cable for an electrically-driven vehicle.

The electrically-driven vehicle is a vehicle that has an electric motor for traveling. Examples of an electrically-driven vehicle include an electric car that has only an electric motor as a drive source, and a plug-in hybrid car that has an electric motor and an internal combustion engine.

### (First Embodiment)

### 1. Structure of Storage Device for Charging Cable

### 1. 1. Outline of Storage Device for Charging Cable

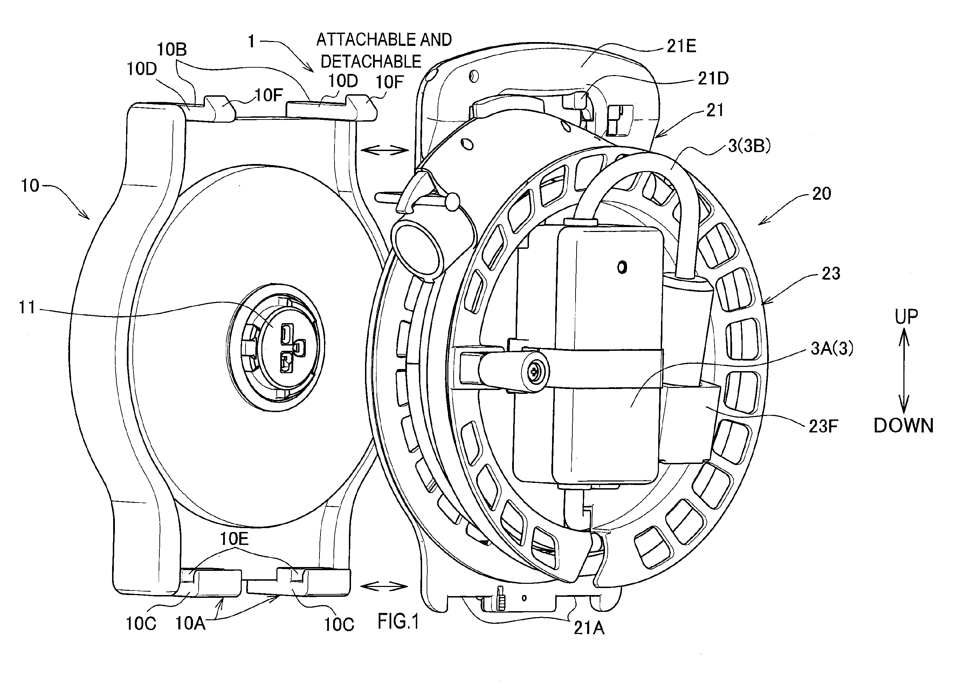

As shown in Fig. 1, a storage device 1 according to the present embodiment is configured to include a holder 10, a reel 20, and so on. The reel 20 is attachable to and detachable from the holder 10. To charge an electrically-driven vehicle, the reel 20 has to be attached to the holder 10.

### 1. 2. Structure of Holder

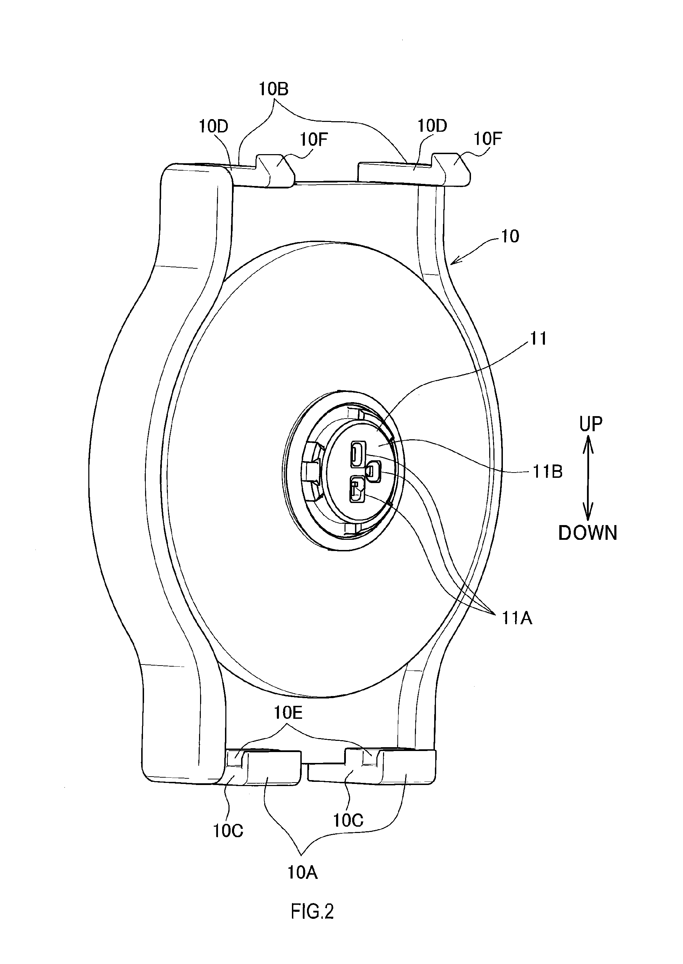

As shown in Fig. 2, provided approximately in the middle of the holder 10 is a holder-side socket 11 rotatable with respect to the holder 10. The holder-side socket 11 is electrically connected to a power source cable (not shown) via a slide contact, such as a slip ring 30 that will be described below, or the like. The power source cable is a cable for electrically connecting a charging power supply side (not shown), provided in a garage or the like, to the slip ring 30.

Support portions 10A and hook portions 10B, which fix the reel 20 to the holder 10, are provided at the upper end and lower end of the holder 10. The support portions 10A at the lower end support the lower end of the reel 20. On the other hand, the hook portions 10B at the upper end hold the reel 20 by being engaged with the upper end of the reel 20. Thus, the entire reel 20 is held by the support portions 10A and hook portions 10B.

The support portions 10A are formed of arms 10C. The arm 10C projects toward the reel 20 from the holder 10, and has a recess 10E on the projecting side thereof. The hook portions 10B are formed of arms 10D. The arm 10D is a hook-like member that projects toward the reel 20 from the holder 10 and has a projecting portion 10F on the projecting side thereof.

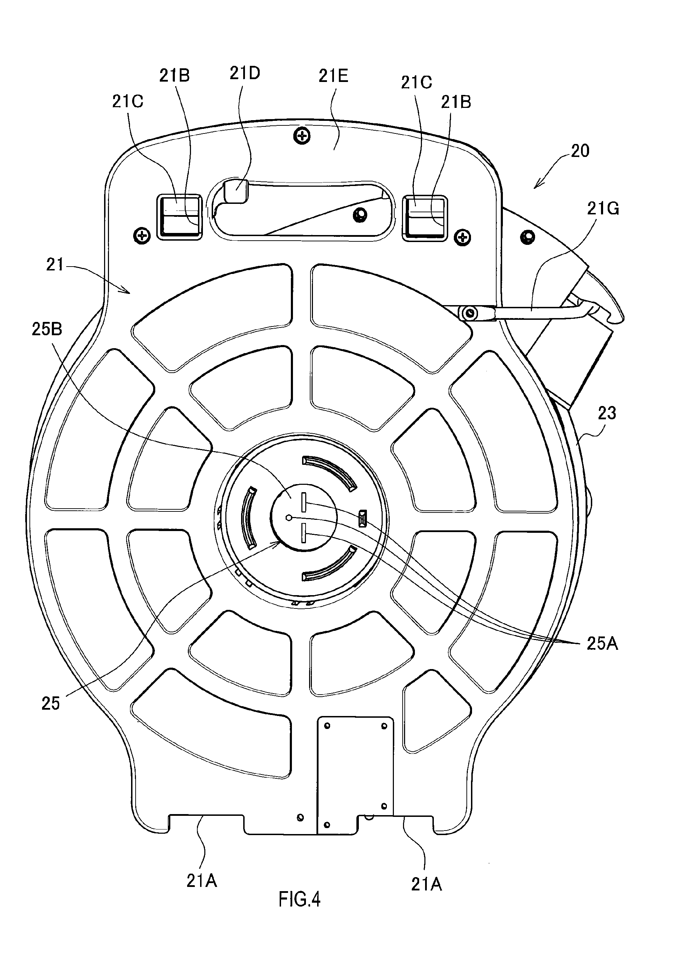

As shown in Fig. 4, a back plate 21 of the reel 20 is provided with recesses 21A, which are fittedly engaged with the recesses 10E of the support portions 10A, and hole-like engagement portions 21B into which the hook portions 10B fit.

Provided in the engagement portions 21B are projecting portions 21C that are engaged with the projecting portions 10F. These projecting portions 21C are pressed by springs (not shown) to positions where they can be engaged with the projecting portions 10F.

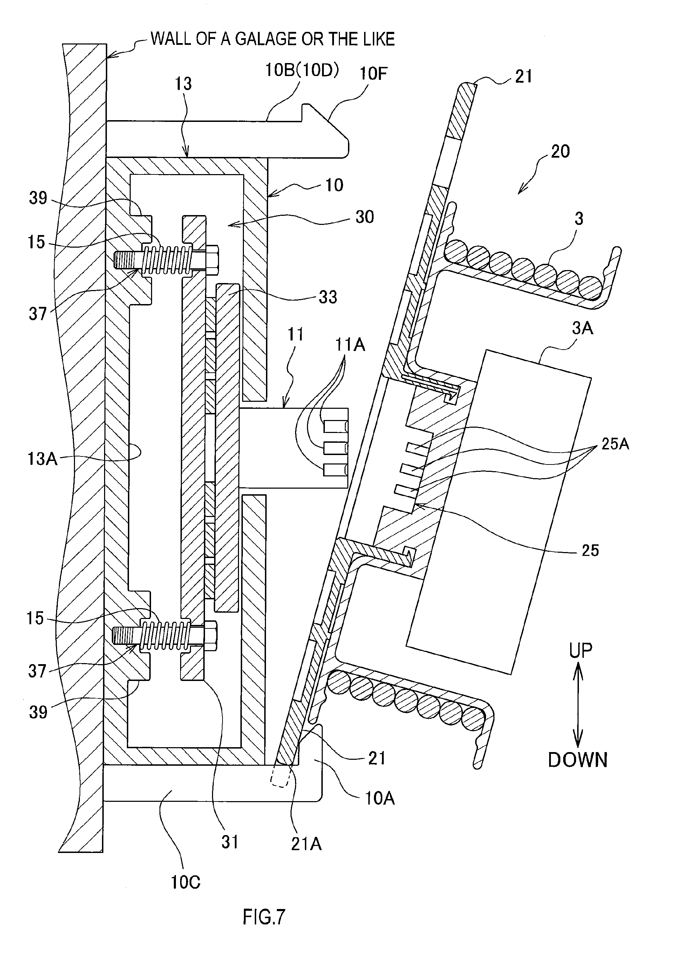

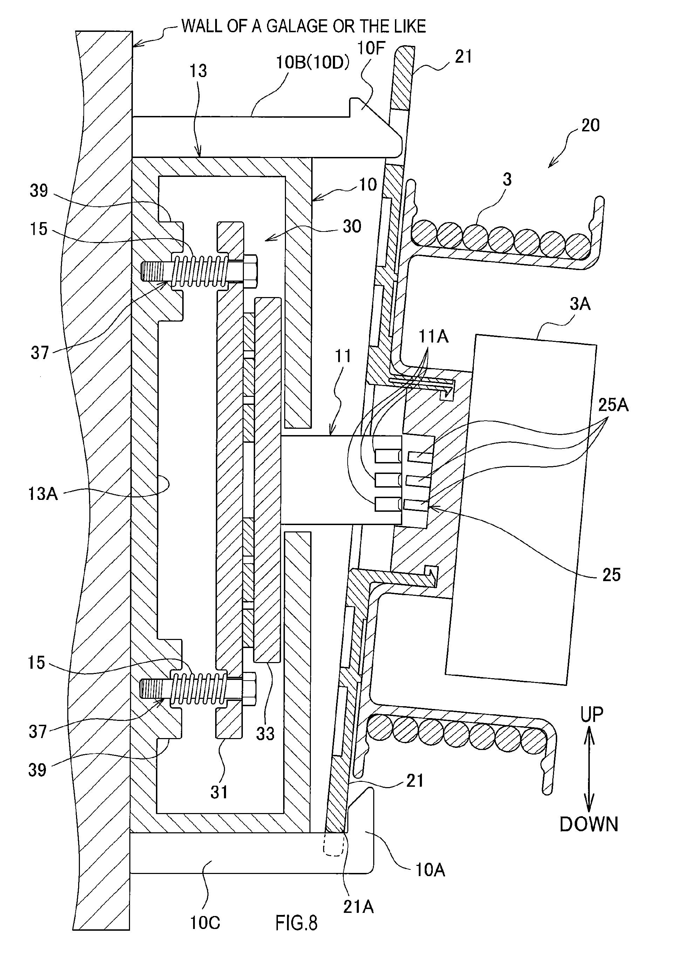

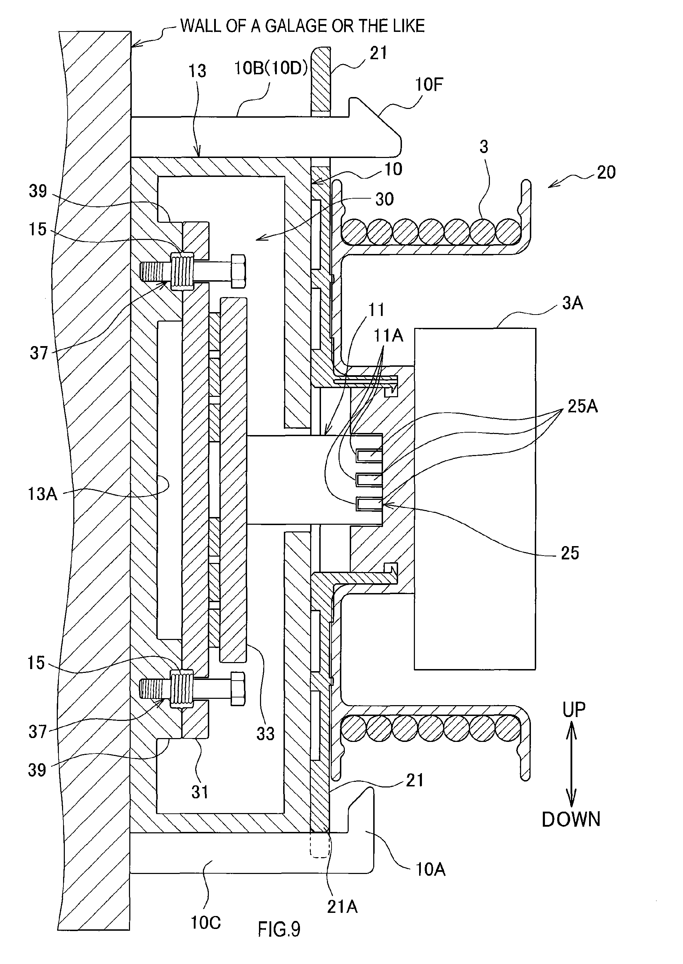

To attach the reel 20 to the holder 10, as shown in Fig. 7, with the recesses 21A of the reel 20 kept fitted on the support portions 10A, the reel 20 is swung around the support portions 10A as fulcra so as to be pressed against the holder 10, as shown in Figs. 8 and 9 in that order.

Consequently, the hook portions 10B fit into the engagement portions 21B and, simultaneously, the projecting portions 21C of the reel 20 and the projecting portions 10F of the holder 10 engage, thus fixing the reel 20 to the holder 10.

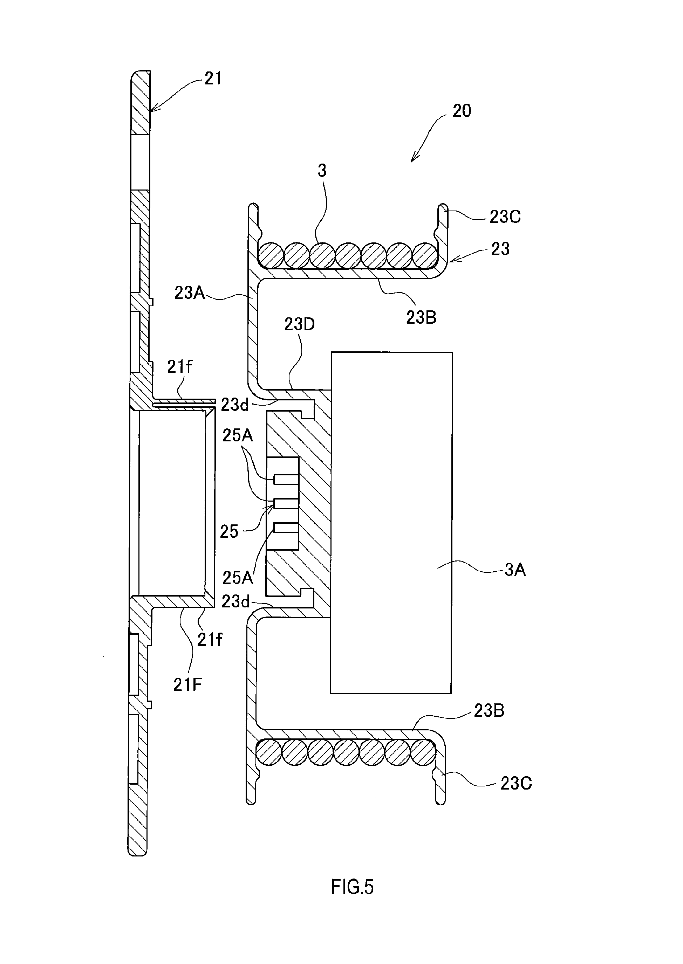

In Figs. 5 to 11, each portion is shown in a simple form to such a degree that understanding of the invention is not significantly affected. Therefore, the shapes of some portions in Figs. 5 to 11 are not exactly the same as those shown in detail in Figs. 1 to 4.

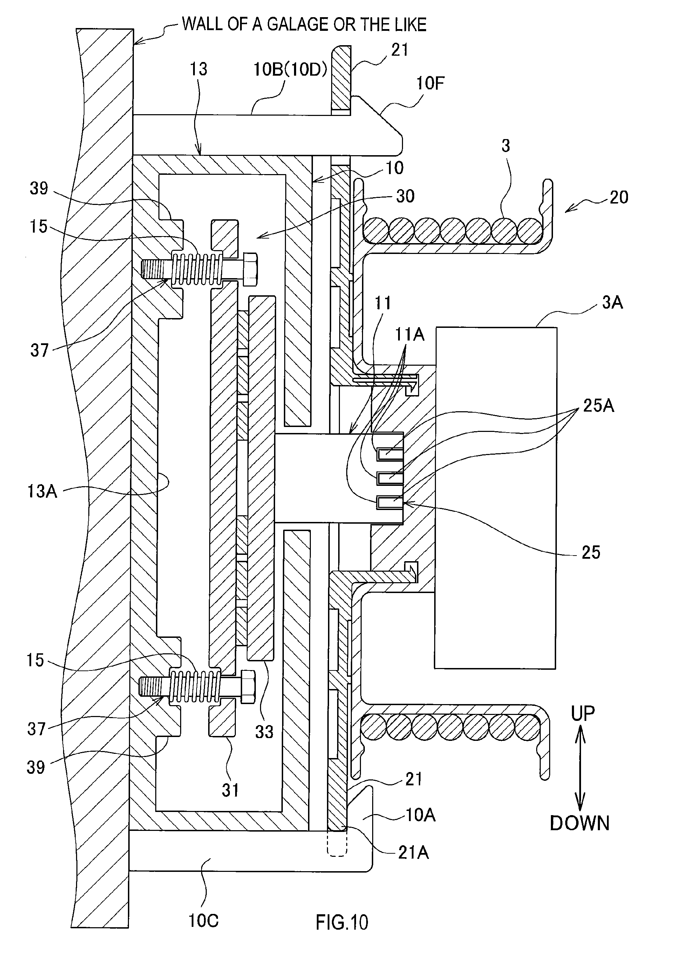

To detach the reel 20 from the holder 10, as shown in Fig. 4, the projecting portions 21C and the projecting portions 10F are disengaged from each other by operating a release button 21D provided on a grip 21E of the reel 20 and, in this state, the reel 20 may be swung around the support portions 10A as fulcra so as to be separated from the holder 10, as shown in Figs. 10, 9, and 8 in that order.

### 1. 3. Structure of Reel

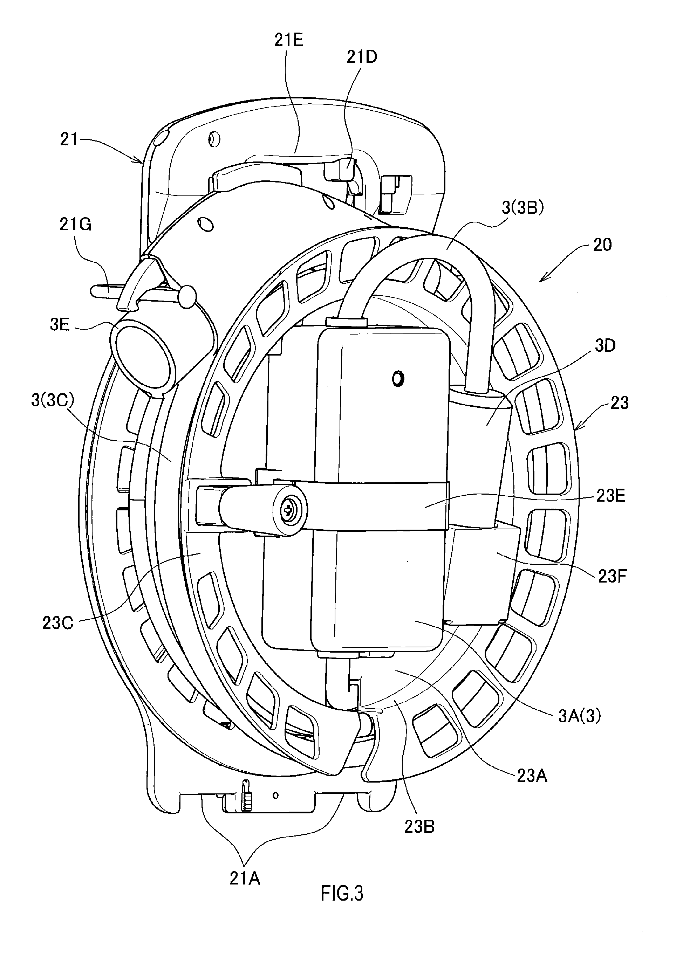

As shown in Fig. 3, the reel 20 is configured to include a rotary drum 23 around which the charging cable 3 is taken up, the back plate 21 by which the rotary drum 23 is supported so as to be rotatable, and so on.

As shown in Fig. 5, the rotary drum 23 is configured to include a disc-like drum plate 23A, an annularly-shaped take-up rim 23B, a flange portion 23C of a brim-like shape provided on the take-up rim 23B, and so on. In the present embodiment, the drum plate 23A, take-up rim 23B, flange portion 23C, and so on are integrally formed from resin.

The drum plate 23A is provided with a fitting portion 23D in which a cylindrical support portion 21F provided on the back plate 21 slidably fits. The inner periphery 23d of the fitting portion 23D and the outer periphery 21f of the support portion 21F come into slide-contact with each other, thus enabling the rotary drum 23 to rotate with respect to the back plate 21.

As shown in Fig. 3, the inner periphery side of the take-up rim 23B of the drum plate 23A is provided with a fixing portion 23E to which a charging control box 3A is fixed. The charging control box 3A is a unit incorporating a control circuit that exerts charging control such as CCID (Charge Circuit Interrupt Device) and so on and is provided in an electric circuit connecting a charging-side power source and an electrically-driven vehicle.

In many cases, the charging control box 3A is supplied by a car manufacturer, or the like, as part of the charging cable 3. Hereinafter, the charging power supply side of the charging cable 3, extending from the charging control box 3A, is called a terminal-side cable 3B, and the electrically-driven vehicle side of the charging cable 3, extending from the charging control box 3A, is called a wound-up-side cable 3C.

The terminal portion of the terminal-side cable 3B is provided with a terminal connector 3D for connection to a power source whereas the terminal of the wound-up-side cable 3C is provided with a vehicle-side connector 3E for connection to the electrically-driven vehicle. Namely, the charging cable 3 according to the present embodiment is configured to include the charging control box 3A, terminal-side cable 3B, wound-up-side cable 3C, terminal connector 3D, vehicle-side connector 3E, and so on.

Provided at the side of the fixing portion 23E of the drum plate 23A is a cable-side connector 23F to which the terminal connector 3D is attachable. Meanwhile, as shown in Fig. 4, provided at the side of the back plate 21 of the drum plate 23A is a reel-side socket 25. This reel-side socket 25 is a connector that is fittable on a holder-side socket 11 and is electrically connected to the cable-side connector 23F.

Therefore, when the holder-side socket 11 and the reel-side socket 25 are fitted with each other while the terminal connector 3D is kept attached to the cable-side connector 23F, the charging cable 3 and the power source cable are rendered electrically conductive.

When the wound-up-side cable 3C, which has been taken up around the rotary drum 23, is pulled out, the holder side socket 11 and the reel-side socket 25 rotate in conjunction with the rotation of the rotary drum 23. However, the conduction state of the charging cable 3 and the power source cable is maintained by a slip ring 30.

The back plate 21 is provided with a locking hook portion 21G, which locks in position on the terminal side of the wound-up-side cable 3C. Therefore, in the state in which the terminal side of the wound-up-side cable 3C is locked by the locking hook portion 21G, the wound-up-side cable 3C, which has been taken up, is prevented from loosening significantly even when the rotary drum 23 rotates.

### 1. 4. Structure for Slip Ring and Support Structure Thereof

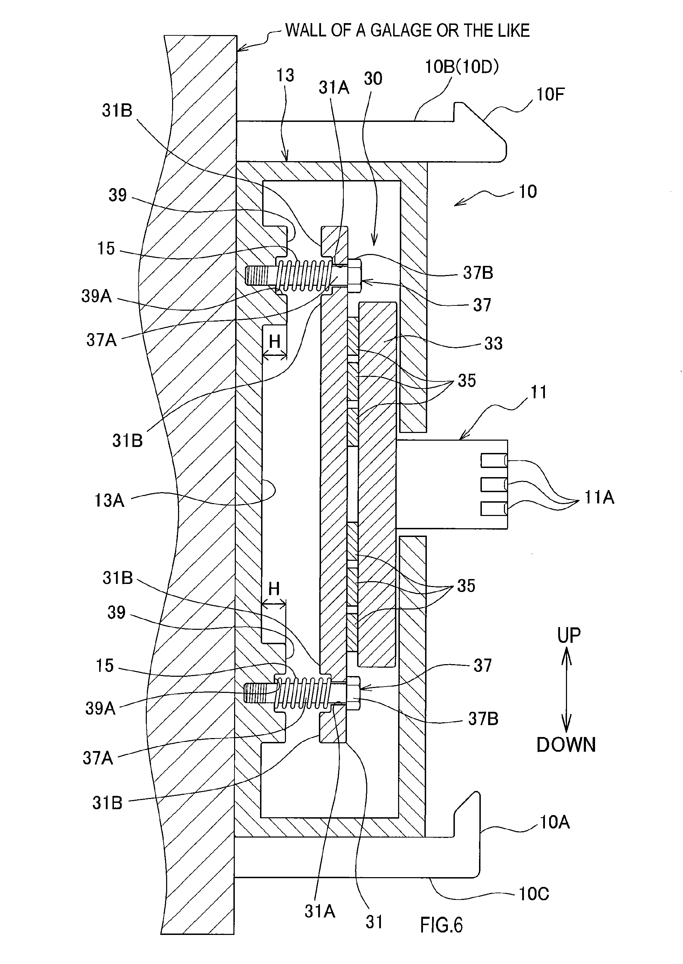

As shown in Fig. 6, the slip ring 30 is configured to include a fixed contact plate 31, a slide contact plate 33, wave springs 35, and so on. The slip ring 30 is elastically supported in a holder casing 13 via elastic members 15 such as coil springs.

The fixed-side contact plate 31 is provided with a ring-shaped electric contact (not shown) with the power source cable connected thereto. On the other hand, the slide contact plate 33 is provided with a ring-like electric contact (not shown) electrically connected to the holder-side socket 11. Both the electric contacts are slidably in contact with the conductive wave springs 35, made of metal or the like.

By virtue of this, the slide contact plate 33 with the holder-side socket 11 fixed thereto and the fixed contact plate 31 elastically supported by the holder casing 13 are rendered electrically conductive via the wave springs 35. Therefore, even when the slide contact plate 33 rotates integrally with the holder-side socket 11, the holder-side socket 11 can rotate with respect to the holder 10 while ensuring conduction with the power source cable.

Each of the wave springs 35 is a change absorption part that, even if the distance between the slide contact plate 33 and the fixed contact plate 31 changes due to variation in dimension or the like, absorbs the change and ensures the conduction between the electric contacts. For this reason, the wave springs 35 are designed so as to be compression deformed to such a degree that the wave springs 35 do not compressed completely when the distance between the slide contact plate 33 and the fixed contact plate 31 is a designed center dimension. In other words, the wave springs 35 are elastically deformable.

The fixed contact plate 31 is provided with a plurality of through-holes 31A. These through-holes 31A extend through the fixed contact plate 31 in a direction parallel to the axial direction of the elastic members 15. A guide member 37 is inserted in each through-hole 31A.

The guide member 37 is a bolt-like member formed from: a guide rod 37A having an outside diameter dimension smaller than the inside diameter dimension of the through-hole 31A, a locking portion 37B for locking the fixed contact plate 31 to the guide member 37, and so on. The guide rod 37A extends from the fixed contact plate 31 to the holder casing 13 through the through-hole 31A, and the one end of the guide rod 37A is fixed to the holder casing 13.

The locking portion 37B provided at the other end of the guide rod 37A is an umbrella-shaped portion having an outside diameter dimension greater than the inside diameter dimension of the through-hole 31A. The one end of the guide rod 37A is provided with a male screw portion for fixing the guide member 37 to the holder casing 13.

The elastic members 15 are disposed in the holder casing 13 and between the fixed contact plate 31 and a portion 13A (hereinafter, referred to as a back cover 13A) of the holder casing 13, which portion 13A faces the fixed contact plate 31.

In the present embodiment, each guide rod 37A is disposed through the corresponding coil-like elastic member 15, thereby fixing the elastic member 15 to the holder casing 13 while preventing buckling deformation of the elastic member 15.

When the slip ring 30 is displaced closer to the back cover 13A, the elastic members 15 are compressed and elastically deformed. Consequently, the elastic members 15 exert elastic forces to the fixed contact plate 31 in the direction in which the slip ring 30 is separated from the back cover 13A. Accordingly, when the slip ring 30 is displaced toward the back cover 13A, the holder-side socket 11 is pressed toward the reel 20 by the elastic members 15.

Since the elastic members 15 according to the present invention are springs utilizing compression elastic deformation, it is not possible to exert an elastic force to the fixed contact plate 31 in the direction in which the slip ring 30 is pulled toward the back cover 13A.

Therefore, in the present embodiment, the dimension of each part is set such that when the reel 20 is attached to the holder 10 as shown in Fig. 10, the elastic members 15 are compressed and elastically deformed to a greater degree than when the reel 20 is detached from the holder 10 as shown in Fig. 6, and the locking portions 37B of the guide members 37 and the fixed contact plate 31 are separated from each other. The state in which the reel 20 is attached to the holder 10 is the state in which the projecting portions 21C are engaged with the corresponding projecting portions 10F.

As shown in Fig. 9, the reel-side socket 25 and holder-side socket 11 are fitted with each other by fitting projecting terminals 25A provided on the reel-side socket 25 into fitting holes 11A provided in the holder-side socket 11.

Therefore, a pair of first abutting portions 11B and 25B, which are brought into contact with each other when both the sockets 11 and 25 are fitted with each other, is provided on the holder 10 and reel 20. In the present embodiment, the first abutting portion 11B of the holder 10 is provided on a part of the holder-side socket 11, which part faces the reel-side socket 25, as shown in Fig. 2. On the other hand, the first abutting portion 25B of the reel 20 is provided on a part of the reel-side socket 25, which part faces the holder-side socket 11, as shown in Fig. 4.

As shown in Fig. 6, the back cover 13A is provided with at least one stopper 39 in the form of a protrusion, which sticks out toward the slip ring 30, that is, the fixed contact plate 31. Contact of the stopper 39 with a second abutting portion 31B provided on the fixed contact plate 31 restricts the maximum displacement of the slip ring 30 toward the back cover 13A.

The projecting dimension H of the stopper 39 is set such that when the reel 20 is attached to the holder 10, contact of the stopper 39 with the second abutting portion 31B takes place before contact of the pair of first abutting portions 11B and 25B with each other takes place.

In the present embodiment, the stopper 39 is provided at each place corresponding to the elastic member 15. Specifically, the stopper 39 is provided for each area of the back cover 13A, in which area the guide member 37 is fixed.

Provided at the fixed contact plate 31 side of each stopper 39 is a recess 39A depressed toward the back cover 13A. Fitted in each recess 39A is the shaft-end side of the elastic member 15. Therefore, each stopper 39 also functions as a spring seat that restricts movement of the elastic member 15 in a direction intersecting the pressing direction of the elastic member 15, that is, in a direction intersecting the axial direction thereof.

### 2. Fitting of Reel-side Socket and Holder-side Socket (Refer to Figs. 8 to 10)

When the reel 20 is attached to the holder 10, the leading-ends of the terminals 25A first fit into the fitting holes 11A, as shown in Fig. 8. At this time, in the present embodiment, the fitting force required to fit the terminals 25A into the fitting holes 11A, that is, the force required to maintain the fitted state of the socket 11 with the socket 25 is set to a force greater than elastic force applied to the slip ring 30 toward the reel 20 by the elastic members 15.

Therefore, when the reel 20 in the state illustrated in Fig. 8 is further swung toward the holder 10, the holder-side socket 11, that is, the slip ring 30 is displaced toward the back cover 13A to be away from the reel 20 without the terminals' 25A fitting into the fitting holes 11A.

As shown in Fig. 9, when contact of the stopper 39 with the slip ring 30 takes place as a result of the displacement of the slip ring 30 toward the back cover 13A, the displacement of the slip ring 30 stops. Therefore, when the reel 20 is further swung toward the holder 10 while the contact of the slip ring 30 with the stopper 39 is maintained, the terminals 25A fit into the fitting holes 11A until contact of the pair of first abutting portions 11B and 25B with each other takes place.

The contact of the pair of first abutting portions 11B and 25B with each other renders the reel 20 unable to further swing toward the holder 10. Therefore, when this state is brought about, the force with which the reel 20 is swung toward the holder 10 is released. Consequently, the slip ring 30 is displaced in a direction to become away from the stoppers 39 by the pressing forces of the elastic members 15 while the fitted state of the reel-side socket 25 and holder-side socket 11 is maintained, as shown in Fig. 10.

### 3. Characteristics of Storage Device according to Present Embodiment

In the present embodiment, the charging cable 3 is stored in a taken-up state and the reel 20 is attachable to and detachable from the holder 10. Therefore, the holder 10 can be installed in a place, such as a garage or parking spot, where charging can be carried out, and the reel 20 alone can be stored (loaded) in, for example, a trunk space and so on.

Since the reel 20 is attachable to or detachable from the holder 10, there may be a certain degree of backlash between the reel 20 and holder 10 even in the state in which the reel 20 is attached to the holder 10. Therefore, when the winding operation of the charging cable 3 and so on is performed under the condition that the reel 20 has been attached to the holder 10, the reel 20 may be separated (displaced) from the holder 10 due to vibration during the operation.

If the reel 20 is separated (displaced) from the holder 10, the fitted state of the pair of sockets 11 and 25 may become insufficient. Such insufficient fitted state of the sockets 11 and 25 may increase electric resistance at the fitted area, resulting in inefficient charging.

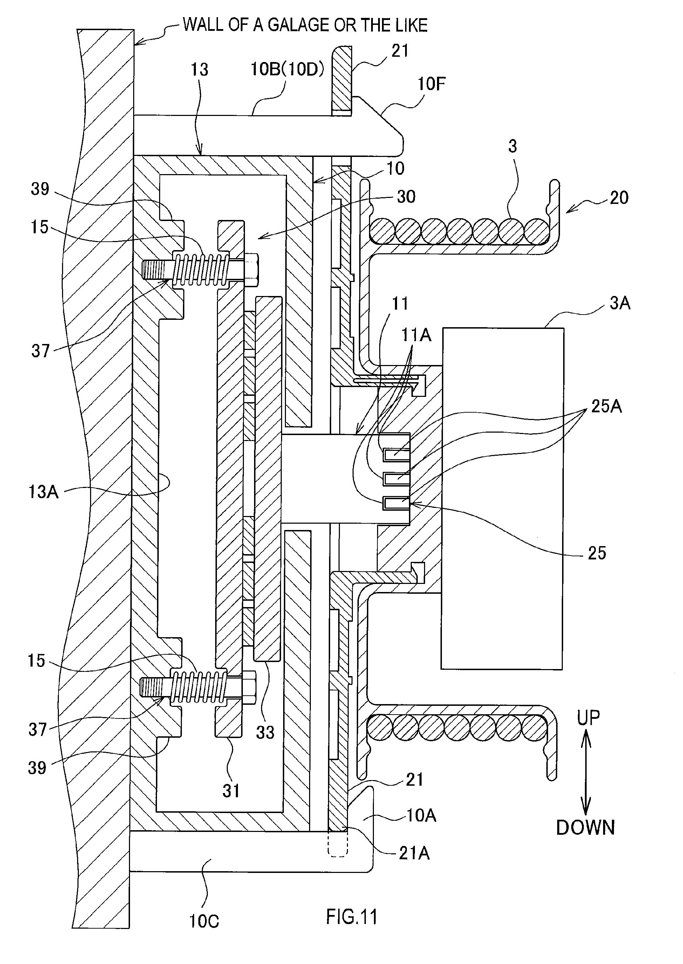

In contrast, the present embodiment is provided with the elastic members 15 for pressing the holder-side socket 11 toward the reel-side socket 25. Accordingly, even if the reel 20 is separated (displaced) from the holder 10, the holder-side socket 11 can be displaced following the reel-side socket 21, as shown Fig. 11.

Accordingly, even if the reel 20 is separated (displaced) from the holder 10, the satisfactory fitted state of the pair of sockets 11 and 25 can be maintained. In other words, there is no risk that the fitted state of the socket 11 with the socket 25 becomes unsatisfactory. This enables stable efficient charging.

The holder-side socket 11 is supported via the elastic members 15. Therefore, as described above, when the holder-side socket 11 and the reel-side socket 25 are fitted with each other, the elastic members 15 are elastically deformed, with the result that the holder-side socket 11 may be moved away from the reel-side socket 25. As a result, the pair of sockets 11 and 25 may not satisfactorily be fitted with each other when the reel 20 is attached to the holder 10.

Compared to this, the present embodiment is characterized in that when the reel 20 is attached to the holder 10, contact of the stoppers 39 with the second abutting portions 31B takes place before contact of the pair of first abutting portions 11B and 25B with each other takes place.

Therefore, after the contact of the stoppers 39 with the second abutting portions 31B takes place, movement of the slip ring 30 is restricted by the stoppers 39 and, therefore, the holder-side socket 11 is prevented from moving away from the reel-side socket 25.

Accordingly, by attaching the reel 20 to the holder 10 so as to press the reel 20 until contact of the pair of first abutting portions 11B and 25B with each other takes place after the contact of the stoppers 39 with the abutting portions 31B, the pair of sockets 11 and 25 can be fitted with each other satisfactorily. Hence, the pair of sockets 11 and 25 can be securely fitted. Consequently, efficient charging can be carried out.

### (Other embodiments)

In the foregoing embodiment, the elastic members 15 are provided on the holder 10 and the holder-side socket 11 is pressed against the reel-side socket 25. However, the invention is not limited thereto. The converse of this configuration is also possible, in which it may be configured that the elastic members 15 are provided on the reel 20 and the reel-side socket 25 is pressed to the side of the holder-side socket 11. In this case, the reel-side socket 25 is elastically supported.

In the foregoing embodiment, the holder-side socket 11 and the reel-side socket 25 are rotatable. However, the invention is not limited thereto.

That is, where the reel-side socket 25 and the charging cable 3 are connected via a slide contact, such as a slip ring, provided on the reel 20, or where the charging cable 3 and the reel-side socket 25 are connected by a connecting cable or the like, the holder-side socket 11 and reel-side socket 25 do not have to be rotated. The present invention can also be applied in such a storage device.

Where the holder-side socket 11 and the reel-side socket 25 do not rotate, it is desirable that a part that comes into contact with the stopper 39, that is, a part corresponding to the second abutting portion 31B may be provided on a socket elastically supported by the elastic members 15, or on a part displaced integrally with this socket.

In the foregoing embodiment, the pair of first abutting portions 11B and 25B are provided on the sockets 11 and 25 respectively. However, the invention is not limited thereto, and the abutting portions 11B and 25B may be provided on other parts.

Additionally, in the foregoing embodiment, the second abutting portions 31B are provided on the fixed contact plate 31. However, the invention is not limited thereto, and the second abutting portions 31B may be provided on any parts of the slip ring 30.

In the foregoing embodiment, each stopper 39 also serves as a spring seat for the elastic member 15. However, the invention is not limited thereto.

Additionally, in the foregoing invention, the stoppers 39 are provided in places corresponding to the elastic members 15. However, the invention is not limited thereto. For example, the stoppers 39 may be provided in places different from the places where the elastic members 15 are disposed. In this case, the number of stoppers 39 may be different from that of the elastic members 15.

In the foregoing embodiment, the coil springs are used as the elastic members 15. However, the invention is not limited thereto. For example, an elastically deformable member such as rubber or a spring other than a coil spring may be used.

In the foregoing embodiment, the holder-side socket 11 is configured to be pressed to the side of the reel-side socket 25 by the elastic members 15. However, the present invention is not limited thereto. For example, the need for the elastic members 15 may be obviated, and the wave springs 35 may be used to function as elastic members. In this case, the fixed contact plate 31 may be fixed to the holder casing 13.

In the foregoing embodiment, each stopper 39 has the form of a projection. However, the invention is not limited thereto. For example, the entire back cover 13A may function as the stopper 39.

Specifically, the distance between the back cover 13A and slip ring 30 is set such that when the reel 20 is attached to the holder 10, contact of the back cover 13A with the second abutting portions 31B takes place before contact of the pair of first abutting portions 11B and 25B with each other takes place. This eliminates the need for the projections and enables the back cover 13A to function as the stopper 39.

In the foregoing embodiment, the three elastic members 15 are disposed at the three corners of an imaginary equilateral triangle. However, the invention is not limited thereto. For example, only one elastic member 15 suffices. In the case of fewer elastic members 15 (e.g., in the case of two or fewer), it is desirable to provide a guide member that guides displacement of the slip ring 30, or the like.

In the foregoing embodiment, the elastic members 15 apply elastic forces to the holder-side socket 11 via the slip ring 30. However, the invention is not limited thereto.

In the foregoing embodiment, since a 200-V alternating current of single-phase three-wire system is used, the electric contacts of the fixed-side and slide contact plates 31 and 33 are configured with three contacts. However, the invention is not limited thereto. The fixed-side and slide contact plates 31 and 33 may be configured with two contacts or four or more contacts.

Additionally, in the foregoing embodiment, the invention is applied in a storage device for storing a charging cable for an electrically-driven vehicle. However, the application of the invention is not limited thereto. For example, the invention can also be applied in storage devices for storing the charging cable 3 for an electrically-driven vehicle not having the charging control box 3A, or for storing another charging cable.

It is also be understood that the invention is not limited to the embodiments described above but may be variously embodied within the scope of the accompanying claims.

## Claims

1. A storage device for a cable, the device comprising:
a holder comprising a socket connected to a power source side;
a reel attached to the holder so as to be attachable thereto and detachable therefrom and comprising a rotary drum to take up the cable;
a socket provided on the reel and fitted with the socket of the holder when the reel is attached to the holder; and
an elastically-deformable elastic member that is provided on at least one member of the holder and the reel and presses the socket of the one member to the side of the socket of the other member.

2. The storage device according to claim 1, wherein the socket of the one member is integrated with a slip ring comprising a fixed contact and a slide contact and receives pressing force from the elastic member via the slip ring,
wherein the holder and reel are provided with a pair of abutting portions that come into contact with each other when both of the sockets are fitted with each other,
wherein the one member is provided with a stopper that restricts the maximum displacement of the slip ring, by contact of the stopper with a second abutting portion provided on the slip ring, and
wherein when the reel is attached to the holder, the contact of the stopper with the second abutting portion takes place before a contact of the pair of first abutting portions with each other takes place..

3. The storage device according to claim 2, wherein the stopper is a projection that sticks out toward the slip ring, and wherein the stopper also functions as a spring seat that restricts movement of the elastic member in a direction intersecting a pressing direction of the elastic member.

4. The storage device according to claim 3, wherein the socket integrated with the slip ring is integrated at the side of the slide contact of the slip ring, and
wherein the elastic member applies the pressing force to the side of the fixed contact of the slip ring.

5. The storage device according to any one of claims 1 to 4, wherein the elastic member is provided on the holder.

6. The storage device according to claim 2, wherein the fixed contact and the slide contact are connected so as to be electrically conductive via a wave spring made of a conductive material.

7. The storage device according to claim 6, wherein the fixed contact and the slide contact are slidably in contact with the wave spring.

8. The storage device according to claim 6 or 7, wherein the wave spring is configured so as to be compression deformed while disposed in contact with the fixed contact and the slide contact.

9. The storage device according to any one of claims 1 to 8, further comprising a guide member, which extends through the elastic member, wherein the elastic member is a coil spring.
